# DEMANDE DE BREVET EUROPEEN

(11) **EP 2 957 465 A1**
(43) Date de publication de la demande: **23.12.2015**
(21) Numéro de dépôt: 15290155.9
(22) Date de dépôt: 11.06.2015
(51) Int. Cl.: B60R 9/042

(54) **MONTE-CHARGE PERFECTIONNÉ POUR TOIT D'UN VÉHICULE TERRESTRE**

(30) Priorité: 16.06.2014 FR 1401361
(71) Demandeur: Amilcar, 95310 Saint-Ouen-L'Aumône (FR)
(72) Inventeur: Zignani, Christian, 92320 Chatillon (FR)
(74) Mandataire: Hammond, William

(57) **Abrégé**

Il comprend un berceau (4), qui, en position de transport, est disposé sensiblement à l'horizontale sur un toit (2) et qui est articulé à l'extrémité d'un bras pivotant (5) dont l'autre extrémité est articulée sur le toit (2) du véhicule (3) ou sur un élément fixé à celui-ci, un vérin d'actionnement (6) qui est disposé sur ce toit de manière à agir sur ledit bras (5) pour en entraîner le pivotement dans les deux sens, des moyens de guidage étant aménagés à l'arrière dudit toit (2) de telle sorte que le pivotement du bras (5) par l'action du vérin (6) entraîne le basculement dudit berceau (4) guidé par les moyens de guidage (7), ledit berceau (4) passant ainsi selon le sens de pivotement de la position de transport à une position de chargement oblique ou sensiblement verticale à l'arrière dudit véhicule (3) et réciproquement, le bras (5) est constitué de deux bielles articulées l'une sur l'autre, une bielle principale (5a), sur laquelle agit le vérin d'actionnement (6), dont une extrémité est articulée sur le toit (2) du véhicule (3) et une bielle secondaire (5b) dont une extrémité est articulée sur celle correspondante de la bielle principale (5a) et l'autre sur le berceau (4). Le monte-charge comprend au moins un tirant (8) qui est articulé par une extrémité sur le toit (2) et dont l'autre extrémité est articulée sur la bielle secondaire (5b) en un point situé au-delà du point d'articulation de la bielle secondaire (5b) sur la bielle principale (5a) par rapport au point d'articulation de la bielle secondaire (5b) sur le berceau (4).

Application dans le domaine des véhicules utilitaires.

## Description

La présente invention est relative à un monte-charge perfectionné pour toit d'un véhicule terrestre.

Il est connu selon le document FR-2 936 989 A, un monte-charge pour toit d'un véhicule terrestre, comportant un support oblong de charge qui est disposé en position de transport sensiblement à l'horizontale sur le toit du véhicule et qui est articulé à l'extrémité d'un bras pivotant dont l'autre extrémité est articulée sur le véhicule ou sur un élément fixé à celui-ci, et au moins un vérin d'actionnement qui est aménagé sur le véhicule de manière à agir sur le bras pour entraîner le pivotement de ce bras dans les deux sens, tandis qu'un moyen de guidage est aménagé à l'arrière du toit du véhicule de telle sorte que le pivotement du bras par l'action du vérin entraîne le basculement du support qui est guidé par le moyen de guidage (13) : ce support passe ainsi selon le sens de pivotement, de la position de transport sensiblement à l'horizontale sur le toit du véhicule à une position de chargement oblique ou sensiblement verticale à l'arrière du véhicule, ou réciproquement.

Ce dispositif antérieur a pour inconvénient notable de ne pas permettre la manipulation de charges relativement lourdes.

On connaît également une galerie de toit de véhicule hydraulique à commande électrique ou manuelle avec systèmes de sécurité, telle que décrite dans le document FR-2 850 337 A Le dispositif pour manoeuvrer cette galerie comprend une structure intermédiaire pivotant sur son extrémité arrière sur une ossature de base qui est fixée sur le toit d'un véhicule, grâce à au moins un vérin hydraulique.

Ce dispositif antérieur, tout comme le précédent, ne permettent pas la manipulation de charges lourdes.

Or la présente invention a notamment pour but de permettre de monter/descendre d'un toit de véhicule utilitaire des charges dont le poids est aussi proche que possible de la limite du poids pouvant être supporté par un tel toit.

Un autre but de la présente invention est de permettre qu'un berceau, comme par exemple une galerie de toit, puisse descendre aussi bas que possible.

Ces buts ainsi que d'autres qui apparaîtront par la suite sont atteints par un monte-charge pour toit de véhicule terrestre comprenant un berceau sur lequel une charge peut être disposée, qui, en position de transport, est disposé sensiblement à l'horizontale sur un toit et qui est articulé à l'extrémité d'un bras pivotant dont l'autre extrémité est articulée sur le toit du véhicule ou sur un élément fixé à celui-ci, un vérin d'actionnement qui est disposé sur ce toit de manière à agir sur le bras pour en entraîner le pivotement dans les deux sens, des moyens de guidage étant aménagés à l'arrière du toit de telle sorte que le pivotement du bras par l'action du vérin entraîne le basculement du berceau guidé par les moyens de guidage, le berceau passant ainsi selon le sens de pivotement de la position de transport à une position de chargement oblique ou sensiblement verticale à l'arrière du véhicule et réciproquement, lequel monte-charge est caractérisé, selon la présente invention, par le fait que, d'une part, le bras est constitué de deux bielles articulées l'une sur l'autre, une bielle principale, sur laquelle agit le vérin d'actionnement, dont une extrémité est articulée sur le toit du véhicule est une bielle secondaire dont une extrémité est articulée sur celle correspondante de la bielle principale et l'autre sur le berceau, et que, d'autre part, il comprend au moins un tirant qui est articulé par une extrémité sur le toit et dont l'autre extrémité est articulée sur la bielle secondaire en un point situé au-delà du point d'articulation de la bielle secondaire sur la bielle principale par rapport au point d'articulation de la bielle secondaire sur le berceau.

Avantageusement, le point d'articulation de chaque tirant sur le toit est situé entre le point d'articulation de la bielle principale sur ce toit et l'arrière de ce toit.

De préférence, la partie de la bielle secondaire comprise entre les points d'articulation de celle-ci sur la bielle principale, d'une part, et sur le tirant 8 d'autre part, est relevée vers le haut c'est-à-dire forme un angle obtus avec l'autre partie de cette bielle secondaire comprise entre les points d'articulation sur la bielle principale, d'une part, et sur le berceau, d'autre part.

Avantageusement, le berceau est de forme rectangulaire et constitué de deux longerons transversaux dont un coopère avec l'extrémité correspondante de la bielle secondaire et de deux longerons longitudinaux coopérant avec les moyens de guidage.

De préférence, les moyens de guidage sont constitués par des roulettes folles disposées à l'arrière du toit et coopérant avec les longerons longitudinaux du berceau.

La description qui va suivre et qui ne présente aucun caractère limitatif, doit être lue en regard des figures annexées parmi lesquelles :

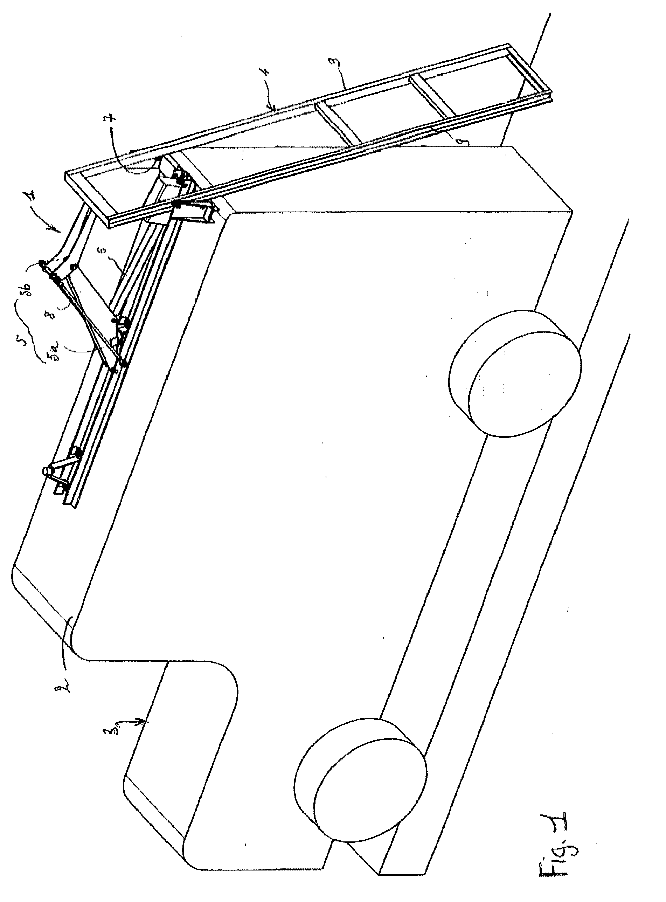

- la figure 1 est une vue en perspective d'un véhicule terrestre sur le toit duquel est disposé un monte-charge perfectionné selon la présente invention en position de chargement/déchargement ; et,
- la figure 2 est une vue en perspective représentant le monte-charge de la figure 1 en position de transport.

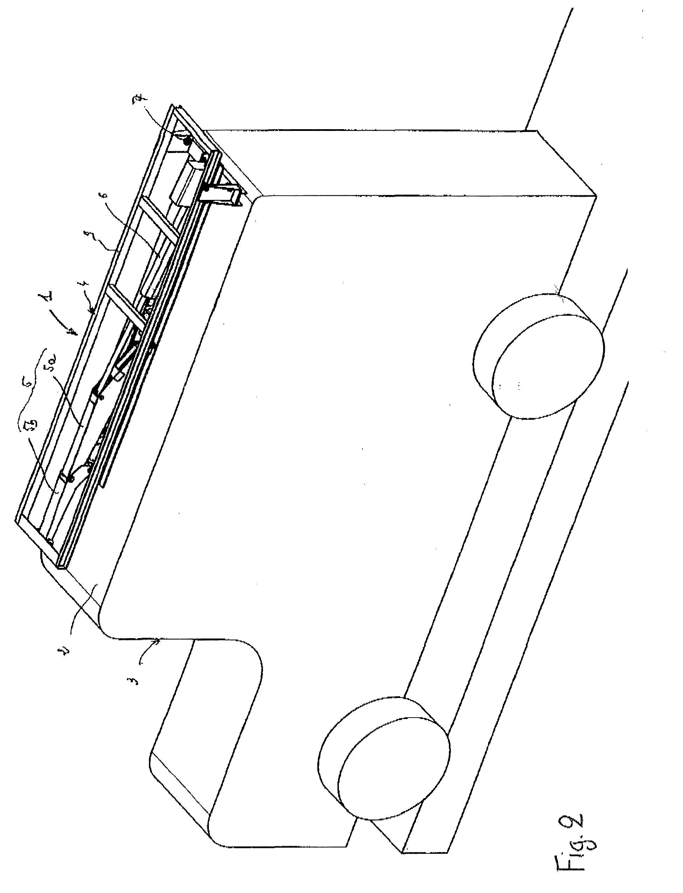

Ainsi qu'on peut le voir sur ces figures, un monte-charge perfectionné, désigné dans son ensemble par la référence 1, pour le toit 2 d'un véhicule terrestre 3 comprend un berceau 4 sur lequel une charge peut-être disposée : ce berceau 4 est disposé en position de transport, comme représenté à la figure 2, sensiblement à l'horizontale sur le toit 2 et est articulé à l'extrémité d'un bras pivotant 5 dont l'autre extrémité est articulée sur le toit 2 du véhicule 3 ou sur un élément fixé à celui-ci.

Ce monte-charge 1 comprend aussi un vérin d'actionnement 6 qui est disposé sur ce toit 2 de manière à agir sur le bras pivotant 5 pour en entraîner le pivotement dans les deux sens. Des moyens de guidage 7 sont aménagés à l'arrière du toit 2 de telle sorte que le pivotement du bras pivotant 5 par l'action du vérin d'actionnement 6 entraîne le basculement du berceau 4 guidé par les moyens de guidage 7 : le berceau 4 passe ainsi, selon le sens de pivotement, de la position de transport à une position de chargement/déchargement oblique ou sensiblement verticale à l'arrière du véhicule 3 et réciproquement.

Selon la présente invention, le bras pivotant 5 est constitué de deux bielles articulées l'une sur l'autre : une bielle principale 5a dont une extrémité est articulée sur le toit 2 du véhicule 3, et une bielle secondaire 5b dont une extrémité est articulée sur celle correspondante de la bielle principale 5a et l'autre sur le berceau 4. Le berceau 4 est de forme rectangulaire et constitué de deux longerons transversaux 9a dont un coopère avec l'extrémité correspondante de la bielle secondaire 5b et de deux longerons longitudinaux 9b coopérant avec les moyens de guidage 7.

De plus, le monte-charge 1 comprend au moins un tirant 8 dont une extrémité est articulée sur le toit 2 et dont l'autre extrémité est articulée sur la bielle secondaire 5b en un point située au-delà du point d'articulation de la bielle secondaire 5b sur la bielle principale 5a par rapport au point d'articulation de la bielle secondaire 5b sur le berceau 4. Le plus généralement, les tirants 8 sont au nombre de deux, disposés de part et d'autre de la bielle principale 5a.

Le point d'articulation de chaque tirant 8 sur le toit 2 est situé entre le point d'articulation de la bielle principale 5a sur le toit 2 et l'arrière de ce toit,

Selon le présent exemple de réalisation, la partie de la bielle secondaire 5b comprise entre les points d'articulation de celle-ci sur la bielle principale 5a, d'une part, et sur les tirants 8 d'autre part, est relevée vers le haut c'est-à-dire forme un angle obtus avec l'autre partie de cette bielle secondaire comprise entre les points d'articulation sur la bielle principale 5a, d'une part, et sur le berceau 4, d'autre part.

Lorsque le berceau 4 est en position de transport comme représenté à la figure 2, il est donc sensiblement horizontal sur le toit 2 du véhicule 3. Dans cette position, le vérin d'actionnement 6 est déployé au maximum, et les bielles principale 5a et secondaire 5b sont elles aussi en position sensiblement horizontale : la bielle secondaire 5b est située dans le prolongement de la bielle principale 5a. Quant aux tirants 8, ils sont en position sensiblement horizontale de part et d'autre de la bielle principale 5a.

Pour faire passer le berceau 4 de cette position horizontale à la position, de chargement/déchargement oblique, il suffit de commander le raccourcissement du vérin d'actionnement 6 de ce fait, ce dernier exerce une force de traction sur la bielle principale 5a entraînant son relevageet par conséquent celui de la bielle secondaire 5b par l'intermédiaire des tirants 8 qui provoquent en outre un basculement de la bielle secondaire 5b autour de son point d'articulation sur la bielle principale 5a. Ces mouvements entraînent simultanément un glissement du berceau 4 vers l'arrière du toit 2, puis à son basculement autour des moyens de guidage constitués, selon le présent exemple de réalisation, par des roulettes folles. Ces moyens de guidage coopèrent avec les longerons longitudinaux 9b du berceau 4 qui, par exemple, sont en forme de U, dont l'ouverture disposée latéralement entoure la roulette folle correspondante. Lorsque la course du vérin d'actionnement est minimale, le berceau 4 est en position de chargement/déchargement oblique, voire même verticale en fonction de la géométrie du véhicule. La bielle principale 5a forme alors un angle inférieur à 90 degrés avec le toit 2 du véhicule 3.

Pour faire remonter le berceau 4 sur le toit 2, il suffit de déclencher le déploiement du vérin d'actionnement 6, qui, en poussant sur la bielle principale 5a entraîne sa rotation autour de son extrémité articulée sur le toit 2: l'ensemble de ces actions a pour conséquence de tirer le berceau 4 et de le faire remonter jusqu'à son pivotement autour des roulettes folles.

Puis, la poussée du vérin d'actionnement 6 continuant de s'exercer sur la bielle principale, la bielle secondaire 5b bascule, du fait de la présence des tirants 8, autour de son point d'articulation sur la bielle principale 5a.

## Revendications

1. Monte-charge pour toit de véhicule terrestre comprenant un berceau (4) sur lequel une charge peut être disposée, qui, en position de transport, est disposé sensiblement à l'horizontale sur un toit (2) et qui est articulé à l'extrémité d'un bras pivotant (5) dont l'autre extrémité est articulée sur le toit (2) du véhicule (3) ou sur un élément fixé à celui-ci, un vérin d'actionnement (6) qui est disposé sur ce toit de manière à agir sur ledit bras (5) pour en entraîner le pivotement dans les deux sens, des moyens de guidage étant aménagés à l'arrière dudit toit (2) de telle sorte que le pivotement du bras (5) par l'action du vérin (6) entraîne le basculement dudit berceau (4) guidé par les moyens de guidage (7), ledit berceau (4) passant ainsi selon le sens de pivotement de la position de transport à une position de chargement oblique ou sensiblement verticale à l'arrière dudit véhicule (3) et réciproquement, **caractérisé, par le fait que**, d'une part, ledit bras (5) est constitué de deux bielles articulées l'une sur l'autre, une bielle principale (5a), sur laquelle agit le vérin d'actionnement (6), dont une extrémité est articulée sur le toit (2) du véhicule (3) et une bielle secondaire (5b) dont une extrémité est articulée sur celle correspondante de la bielle principale (5a) et l'autre sur le berceau (4), et que, d'autre part, il comprend au moins un tirant (8) qui est articulé par une extrémité sur le toit (2) et dont l'autre extrémité est articulée sur la bielle secondaire (5b) en un point situé au-delà du point d'articulation de la bielle secondaire (5b) sur la bielle principale (5a) par rapport au point d'articulation de la bielle secondaire (5b) sur le berceau (4).

2. Monte-charge selon la revendication 1, **caractérisé par le fait que** le point d'articulation de chaque tirant (8) sur le toit (2) est situé entre le point d'articulation de la bielle principale (5a) sur ledit toit (2) et l'arrière dudit toit (2).

3. Monte-charge selon la revendication 1, **caractérisé par le fait que** la partie de la bielle secondaire (5b) comprise entre les points d'articulation de celle-ci sur la bielle principale (5a), d'une part, et sur le tirant (8) d'autre part, est relevée vers le haut c'est-à-dire forme un angle obtus avec l'autre partie de ladite bielle secondaire (5b) comprise entre les points d'articulation sur la bielle principale (5a), d'une part, et sur le berceau (4), d'autre part.

4. Monte-charge selon la revendication 1, **caractérisé par le fait que** le berceau (4) est de forme rectangulaire et constitué de deux longerons transversaux (9a) dont un coopère avec l'extrémité correspondante de la bielle secondaire (5b) et de deux longerons longitudinaux (9b) coopérant avec les moyens de guidage (7).

5. Monte-charge selon la revendication 1, **caractérisé par le fait que** les moyens de guidage (7) sont constitués par des roulettes folles disposées à l'arrière du toit et coopérant avec les longerons longitudinaux (9b) du berceau (4).
